# EUROPEAN PATENT APPLICATION

(11) **EP 3 264 349 A1**
(43) Date of publication of application: **03.01.2018**
(21) Application number: 15865314.7
(22) Date of filing: 30.11.2015
(51) Int. Cl.: G06Q 20/00, G06Q 30/06

(54) **SYSTEM OF PAYMENT AND COMMUNICATION CONNECTIONS FOR REMOTE SERVICING OF CUSTOMERS**

(30) Priority: 02.12.2014 RU 2014148614
(71) Applicant: Breyev, Igor Vadimovich, g. Ekaterinburg 620062 (RU)
(72) Inventor: Breyev, Igor Vadimovich, g. Ekaterinburg 620062 (RU)
(74) Representative: Reb, Carina
(86) International application number: PCT/RU2015/000833
(87) International publication number: WO 2016/089253

(57) **Abstract**

"System of payment-communication links for remote customer service" - The claimed invention relates to remote financial systems service of the bank's customer and can be used in commercial transactions and the receipt by the buyer of reliable and complete information on rating of the seller with minimal timeframe and financial costs. The technical result achieved by the claimed invention is to increase the reliability and security of the commercial transaction by the buyer by providing objective information from the independent supplier in the form of the seller's rating obtained as a result of the analysis carried out and the offer to the buyer of ways to minimize operational risks. This technical result is achieved by the fact that the system of payment-communication links for remote customer service, including the seller's rating formation block, a single server of the system and connected with it by intra-system communication channels united into the local information and payment network computer devices (workstations) of the buyers interacting with each other via wireless Internet, where a single server contains interconnected central control block (CCB), an information storage block, a response formation, block, with the seller rating formation block being an independent information/or seller rating provider's server connected to a single server in which the filter containing a request direction, receiving a response from an independent information provider and the formation of a notice block, a two-way communication connected to a central control block interacting with a block of recommendation and/or advice and a block of implementation of the application and/or orders executed with she possibility of automatically implementing the offer to the buyer of the issue of a covered letter of credit or escrow account settlement associated with the information storage block which, in turn is connected to the future operation template generation block, wherein the information storage block and the template formation block have a two-way communication with the block for the formation of requests and/or orders, which is equipped with a shortcut button, and the information storage block contains data on the operations performed.

## Description

The claimed invention relates to systems of remote financial service for the bank's customers and can be used for commercial transactions and receipt by the buyer of reliable and complete information on rating of the seller with minimal timeframe and financial costs.

According to the level of technical development, an electronic banking guarantee system is known, which is comprising computer devices united by channels of intrasystem communication into the local network of information-computer network. The system interacts by global information and communication internet environment with electronic trades such as business-to-business (B23) and/or business-to-government (B2G), via communication channels, for example, the main server of the system (B) and the personal computers of the operators with certification centers for issuing digital signatures, personal computers of operators of guarantor banks, personal computers of the client network (organizers of trade procedures and participants of trade procedures).

### The system contains:

Computing unit of the electronic document creation device; and electronic document management EBS, computing unit of equivalence conditions EDS of the handwritten signature, the computing unit of the confirmation device and cryptographic protection certificates of EBS, a personal computer that generates together with the EBC system server, an automated workstation (AWS) of complex reporting of EBC, computing unit of the formation and storage of databases. EBS systems, electronic circuit of intrasystem communication channels (see RF patent No. 81824 for the utility model "System Of Electronic Banking Guarantee", filing date 23.10.2008, published on 27.03.2C09).

An information and communication system is known to include a subsystem of data entry, identification and registration of users, which is a server device/devices (server device), which, in turn, includes devices for communication over the Internet comprises of at least one processor and associated computer-readable medium/computer-readable media (computer-readable media) containing data of identification programs, user's registration, personalization of data and their transformation within the system, a data processing subsystem, a server device that includes at least one processor, computer-readable media associated therewith, containing data of programs of formatting and adaptation to the system, distribution, transformation of data, the placement of data on the computer-readable media, the editing subsystem of video, audio, photo and text data, which is a server device, comprising of, at least, one processor associated with it machine-readable media (the media contains data of editing, formatting and assembling programs of video, audio, photo and text data, as well as their transformation within the system), a subsystem for processing user requests, which is a server device, comprising of at least one processor associated with it computer-readable media containing program data providing processing user requests by activating program data responsible for graphical representation of the parts of the geographical map and/or sections of the graphic image and/or list symbols on the monitor/display and the issuance of the requested personalized and/or referenced and/or information data corresponding to these programs, to the monitor/display and/or user output devices, communication subsystem, which is a server device that includes at least one processor, computer-readable media associated therewith, containing data programs for communication between users, as well as users and system via the Internet, a subsystem for storing personalized data, which is a computer-readable medium containing data, located on named and having identification data users of computer readable media that are located and connected among themselves in accordance with the organic structure of location and connections, a subsystem of storage of reference and information data, which is a computer-readable media containing cataloged reference data, located in named parts of the machine-readable medium having hierarchical structure of location and connections, with all subsystems being interconnected logically and through programs by means of conductive lines and/or via the Internet, and the processor/processors, computer-readable media, as well as other structural elements of one subsystem being able to perform and/or combine functions of similar structural elements of other subsystems (see RF patent No. 118088 for the utility model "Information And Communication System", filing date 22/02/2012, published on 10/07/2012).

In addition, according to the level of technical development, system for the sale of goods or services through telecommunication networks is known, that provides the buyer with a choice of goods or service with minimal timeframe and financial costs, the system also implements the possibility of participation in the tender of all registered sellers. A system in which server of the tender organizer consists of preliminary review block, connected to the request formalization block, consisting of filter connected to the block divided by two parts, one of which is a contact information block connected to the block for determining the interaction pair, and the other - for the general information block, which is connected to the processing block, connected to the central control block, which has connections to the block of notices formation, block of formation of a rating of sellers of goods or services and a block for determining an interaction pair, block of notifications has connections to the server of the buyer and the server of the seller of goods or services, connected, in turn, with the complaints reception block, and the complaint reception block is connected to the block of rating formation of sellers of goods or services, connected to the block of preliminary review and with the client database block connected to the filter, the merchant's server also has a connection to the proposal processing block connected to central control block, and the customer server - with the pair detection unit interaction, connected to the central control unit (see RF patent No. 66566 to the utility model "system For The Sale of Goods Or Services By Telecommunications Networks", filed on 20/03/2007, published on 10/09/2007).

Disadvantage of these technical solutions is cumbersome construction due to the large number of components of the system and the links between them, which reduces the speed of operational work and increases labor intensity of produced operations. In addition, known solutions are unreliable for establishment of communication links between the buyer and the seller and do not have the ability to provide the buyer with information about the rating of potential seller.

The closest technical solution to the claimed invention is system of intercorporate communications, comprising of a single server of the system and user workstations, equipped with PCs that are able to connect to a single server of the system through the Internet, with a single system server which includes the following interlocking blocks: central control block, which is connected with the rating formation block at the output; block of rating formation, which is connected to the CCE at the entrance; block for the formation of a request for commercial deal containing a filter; block for storing information about users and companies, furthermore, the system comprises the following blocks: a request response generating block, which at the input is associated with a block of individual information for user, and at the output - with the CCB; individual information block for the user (buyer or supplier), which is connected to the CPU at the input, and at the output - to the negotiation block and with the block of formation of the answer to the request; block of request negotiation, which at the input is associated with a block of individual information for user, and has a two-way communication with the CCB; block of requests for reputation potential buyer or supplier, which is associated with the block of rating formation and with the CCB; and the following blocks are executed: the block of rating formation is additionally linked at the output with the CCB; block for the formation of an application for a commercial transaction containing a filter is connected to the CCB at the output; central management block is additionally linked at the entrance to the commercial transaction request block, with a rating formation block, with a formation block response to the application, with the negotiation block, and at the exit - with the individual block information for the user (see RF patent No. 102125 "System Of Inter-Corporate Communications (Options)", filing date on 28/06/2010, published on 10/02/2011).

The disadvantages of this solution are the cumbersome system, low reliability and safety of committing commercial transactions due to formation of a rating of seller only within one bank, as well as limited functional system capabilities that do not allow to store the information about the operations and the implementation of applications and/or instructions and form templates for future operations.

The technical result, to which the claimed invention is aimed, is to increase the reliability and safety of commercial transactions by the buyer by providing an independent supplier with objective information in the form of rating of the seller, obtained as a result of the analysis, and offers the buyer ways to minimize operational risks.

Additional results are simplification of the design and enhanced speed of the system.

This technical result is achieved by the construction of the system of payment-communication for remote customer service, including block of rating of the seller, a single server of the system and associated with it united by channels of intrasystem communication into the local information-payment network computer devices (workstations) buyers, interacting with each other through the wireless communication channels of the Internet, with this single server contains an interconnected central unit (CCB), an order generation unit, an information storage unit, the block for response generation. According to the invention, the rating formation block for the seller is an independent information provider server and/or vendor rating associated with a single server, in which the filter block request direction, receive response from an independent supplier of information and the formation of a notice, a two-way communication connected to a central control block interacting with a block of recommendations and/or councils and the block of realization of requests and/or instructions, executed with an opportunity of automatic realization of the offer to the buyer to issue covered letter of credit or settlement by escrow accounts, associated with the information storage block, which, in turn, is connected to the block for generating future operation templates, wherein the information storage block and the template generation block have two-way communication with the requests/orders formation block, which is equipped with a shortcut button, and the information storage block contains data cn the operations performed.

The claimed system is explained in the drawings, where
FIG. 1 - the general scheme of the system of payment-communication links for remote customer service;

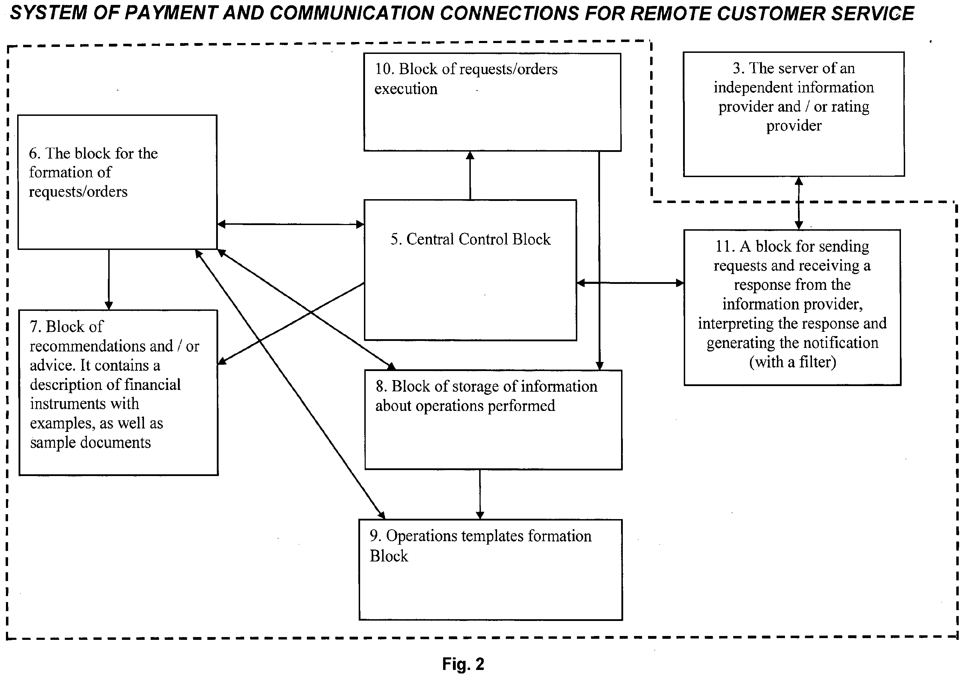

FIG. 2 - block diagram of the system of payment-communication links for remote customer service.

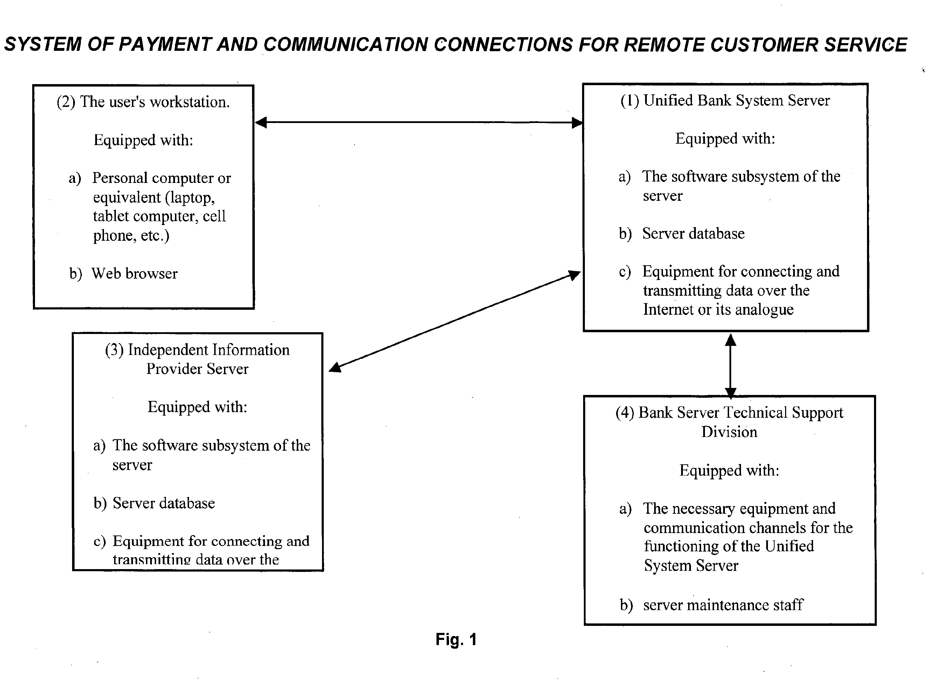

The system of payment-communication links for remote customer service consists of a single server 1, equipped with software content, a database and corresponding equipment that provides a connection by channels of intrasystem communication into the local network of computer devices 2 (work places) of customers through a wired and/or wireless network-Internet. Besides, a single server 1 is connected to a remote server of an independent information provider 3, also provided with relevant software, a database and equipment for connecting and transmitting data over the Internet. Help in the functioning of a single server is provided by a technical support unit 4, which includes personnel serving the equipment included in the system and communication channels that ensure the connection of all elements tc a single network (Figure 1).

Single server 1 contains interconnected blocks, namely: central control block 5 (CCB), connected by two-way communication with the request/or instruction formation block 6, which, in turn, interacts with the recommendations and/or advice block 7 and describes the financial instruments, examples and samples of documents that the buyer can use when filling out the request/order. The order generation and/or ordering block 6 is equipped with a quick access button. In addition, the request formation block 6 is connected by two-way communication with the storage block on operations 8 and the future operations templates formation block 9, interacting with each other. Central control block 5 is connected to the block of realization of requests and/or orders 10, which is connected with the unit for storing information on the operations performed 8. CCB 5, is bilaterally connected to an equipped filter (not shown in the drawing) by a request direction block, receive a response from an independent information provider and notification formation 11, interacting with the server of an independent information provider and/or seller's rating 3. The block for the implementation of orders and/or orders 10 is executed with possibility of automatic realization of the offer to the buyer of the issue covered letter of credit or settlement by escrow accounts.

From the server of the independent information provider and/or rating 3 data about the seller is transmitted to CCB 5, which then offers the buyer several options for further actions, namely: to refuse payment, make a payment, make a payment by issuing a covered letter of credit or settle by escrow account.

In the filter-containing request direction block, receiving a response from an independent information provider and the formation of the notice 11, an "articulation" of information is performed from the filled payment order of the buyer, for example, the allocation of the TIN number, as well as the coding of the request, sending the request to an independent supplier of information and/or rating of the seller 3, receiving a response from him, decoding of the received message and transfer of the received data to the central control block 5. Request generation, transmission, reception of response and decoding occurs within a period not exceeding 60 seconds. In this case, the two-way communication between block 11 and CPU 5 allows to reduce the execution of operations to several seconds, which increases the speed of the entire system.

A set of recommendations and tips 7 contributes to a significant improvement in awareness of the buyer, and also increases the usability of the system.

In the block of realization of requests and/or orders 10, in which all financial transactions are performed, the opportunity of automatic offer to the buyer of issuance of covered letter of credit or settlement by escrow accounts is realized.

Due to the use of the information storage block, search for operations (archive) and the necessary data is accelerated, for example, time of the operation, terms, amounts of payment, requisites of the seller and the buyer and other information.

Due to the block for forming the templates of future operations 9, the time of registration and conduct by the buyer of a similar operation in the future is shortened.

Two-way communication between the information storage unit 8 and the request/order formation block 6 is necessary for the prompt receipt of the archival information for example, on payments made, issued letters of credit, settled escrow accounts, canceled operations, and, as a result, prompt decision-making by the buyer, based on the history of interaction with a particular vendor. Templates formation, block 9 has a two-way communication with the block for the formation, of requests and/or orders.

6, due to what the time for registration by the buyer of a typical operation is reduced, and block 9 is equipped with a quick access button.

Encryption of external communication channels HTTPS. Authorisation of external communication channels - asymmetric encryption on an open key with the addition of so-called access tokens. The repository is NPM (google API Engine Hight Replication Data Storage). Implementation of the entire platform on go-lang (http://golang.org).

The implementation of the invention is confirmed by examples of specific implementation.

The proposed system works as follows.

Users of the system: Administrators - bank employees and buyers - individuals and legal entities, who get services according to the contract at the bank.

Via the global Internet and/or its analogue, buyers and administrators gain access to the working blocks of the system, each of which users can use the services of both the whole system and get information from each block separately. The workplace is equipped with a personal computer or its analogue in the form of a laptop, tablet computer, cellular phone with the appropriate web browser. The use of the system is started in the requests/orders formation block 6, in which the buyer forms an request for carrying out a financial transaction, namely the transfer of funds from settlement account of the buyer on the seller's current account, filling in all the proposed fields, including the Taxpayer Identification Number (TIN) field, while the buyer can ask for the necessary explanations and data in the recommendations and/or advice. block 7, which contains descriptions of financial instruments, a list of financial services, instructions on how to minimize risks in the conduct of a financial transaction (activity), and other useful information.

In addition, the buyer may, in the storage of information on performed transactions block 8 familiarize with the executed operations and/or to use already filled in requests/order template in the template building block of the future operations 9. After the application is formed, it enters the central control block 5, which verifies that the fields are filled correctly and, in the case of their correct filling, the CCB sends notice of this back to the formation of requests/orders block 6, in which he is given a status, for example, "in processing". At the same time, a request is sent to block 11 indicating the seller's TIN, in block 11, the received TIN is supplemented with the necessary official information and the processed data is forwarded to the server of the independent information provider and/or seller's rating 3. The answer containing information about the seller's rating in reverse order is transmitted from the server 3 to the block 8, in which is interpreted, at the same time the notice is generated which is transferred to CCB.

After this, depending on the information received by CCB 5, the following options for the following actions are implemented:

### Example 1

In case the seller's rating is high (and this corresponds to a low level of risk for the buyer), then the request/order is sent for confirmation of execution of the transaction to the buyer and in case of receiving from it a positive decision and the introduction of, for example, an existing password, or an electronic signature, or another means of authentication is sent to the implementation unit of the request/order, where it is executed. Then the information about the executed request/order is received in the storage block of information about the operations performed, and then simultaneously in the block for the formation of requests/orders, where the status of the application is changed to "executed", and an operation template generation block.

### Example 2

In case the seller's rating is low (i.e., the level of risk is increased), then the request/order is sent to confirm the execution of the transaction to the buyer to the block for the formation of requests/orders, which inform the buyer about such low indicator of the rating (risk level) of the seller and offers, first of all, to get acquainted with the information contained in the recommendations and/or advice block, containing a description of the relevant financial instruments, as well as examples and sample documents, with which one can continue to work.

The buyer is offered to choose one of the three options:
1) to refuse paying to the seller;
2) to settle with the seller by issuing a covered letter of credit or settle by escrow account;
3) make a payment.

### Example 2a

When choosing the first option, the buyer's request/order received status is "canceled", and the information goes to the information storage block to the canceled transactions.

### Example 2b

When choosing the second option of the operation execution, the buyer's request/order in the block of formation of requests/orders, it is changed to the request/order for issuance of covered letter of credit or settlement by escrow account. Further, the application is submitted to the central control block (CCB), where it is checked fcr correctness of filling all fields, after which it is sent for confirmation of execution to the buyer and in case of receipt from it of a positive decision and the introduction of a password, for example, or an electronic signature, or other means of authentication is sent to the request/order, where it is executed. Information on the executed requests/orders enters the information storage block about transactions performed, after that information simultaneously enters the block for the formation of requests/orders, where the status of the order is changed to "executed", and the block for forming the operation templates.

### Example 2c

When choosing the third option, the request/order after confirmation of execution of the transaction by introducing a password or electronic signature by the Buyer, or other means of authentication is sent for execution to the implementation block statements/instructions, where it is executed. Information on the executed orders is sent to the information storage block about the operations performed, and then simultaneously to the block for the formation of requests/orders, where the status of the application changes to "executed", and the block for forming the operation templates.

### Example 3

In particular cases, the system allows to check the ratings of prospective vendors without the formation of an request/order to transfer money, but by activating the quick access button in the order/order generation unit.

In this case, information about the TIN number of the seller is consistently received in the CCB, then to the block for sending and receiving a reply, its interpretation and the formation of the notice, and then to the server of the independent supplier of information, where the data on the ratings of potential sellers are stored. The information in the reverse order passes through the request direction and response reception block, the central control block and is delivered to the user in the block of formation of requests/orders. Having thus obtained information about the rating of the seller - the potential partner and, accordingly, the level of possible risk, the buyer can estimate in advance and predict their risks when working with organization.

Due to the possibility of obtaining information, in particular, and from each individual system block, the buyer can reduce the time formation of an order, and quickly obtain reliable data on the rating of the seller, as well as assess their possible commercial and reputational risks.

In addition, the buyer has the opportunity to expand information on reliability and financial stability of the seller when making decisions on the possibility of concluding a transaction (contract) and/or with a direct payment in favor of this seller, which leads to a reduction of financial losses of economic entities.

Increasing the functionality of the system leads to increased use of such financial and payment instrument as a "covered letter of credit", escrow accounts as in quantitative ratio (increase in the number of issued covered letters of credit and escrow accounts, and accordingly, the total amount of issued covered letters of credit and escrow accounts), and in qualitative perspective - the possibility of preventing the occurrence of reputational risks for the buyer, connected with non-fulfillment/improper performance of obligations on seller's side.

## Claims

1. The system of payment-communication links for remote customer service, including the seller's rating formation unit, a single server of the system and connected with it by channels of intrasystem communication to the local information and payment network computer devices (workplaces) buyers interacting with each other through the wireless communication channels of the network the Internet, with a single server comprising of interconnected central control block (CCB), an order/order generation block, an information storage block, a response forming block, having difference in that the ranging generating block is an independent information provider server and/or vendor rating associated with a single server, in which the filter block request direction, receive response from an independent supplier of information and the formation of a notice, a two-way communication connected with the central control block interacting with the recommendations block and/or councils and the block of realization of requests/orders, executed with an opportunity of automatic offer to the buyer to issue the covered letter of credit or make a settlement with escrow account associated with the information storage unit, which, in turn, is connected to the block for generating future operation templates, wherein the information storage block and the template generation block have two-way communication with the block of formation of requests and/or orders, which is equipped with a shortcut button, and the information storage unit contains data on the operations performed.
